# EUROPÄISCHE PATENTSCHRIFT

(11) **EP 1 641 634 B1**
(45) Veröffentlichungstag und Bekanntmachung des Hinweises auf die Patenterteilung: **19.12.2007**
(21) Anmeldenummer: 03740884.6
(22) Anmeldetag: 07.07.2003
(51) Int. Cl.: B44C 5/04, B44F 1/06, B44C 1/17, C03C 17/00

(54) **DURCHSCHEINENDES, DEKORATIVES BILDELEMENT UND VERFAHREN ZU DESSEN HERSTELLUNG**
TRANSLUCENT DECORATIVE IMAGE ELEMENT AND PROCESS FOR PRODUCING THE SAME
ELEMENT D'IMAGE DECORATIF TRANSPARENT ET SON PROCEDE DE FABRICATION

(43) Veröffentlichungstag der Anmeldung: 05.04.2006
(73) Patentinhaber: Hader Susanne, 3205 Gümmenen-Mauss (CH)
(72) Erfinder: Hader Susanne, 3205 Gümmenen-Mauss (CH)
(74) Vertreter: Felder, Peter
(86) Internationale Anmeldenummer: PCT/IB2003/002682
(87) Internationale Veröffentlichungsnummer: WO 2005/002879

(56) Entgegenhaltungen:
- EP-A- 1 099 570
- WO-A-01/43601
- DE-A- 3 838 930
- GB-A- 2 153 744
- US-A- 2 593 396
- US-A- 5 082 703
- PATENT ABSTRACTS OF JAPAN vol. 005, no. 136, 28. August 1981 (1981-08-28) & JP 56 069243 A (YAMAMURA GLASS KK), 10. Juni 1981 (1981-06-10)

## Beschreibung

### Technisches Gebiet

Die Erfindung betrifft ein dekoratives Element gemäss dem Oberbegriff des Anspruchs 1 sowie ein Verfahren zu dessen Herstellung.

### Stand der Technik

Die US 2,593,396 beschreibt ein Verfahren zum Aufbringen eines mit einem fotografisch oder drucktechnisch erstellten Bildmotiv versehenen Gelatinefilms auf eine Glasoberfläche. Insbesondere hat das bekannte Verfahren zum Ziel, eine Tischplatte aus Glas mit einem dekorativen Bildmotiv auszustatten, wobei letzteres möglichst kratz- und feuchtigkeitsbeständig angebracht werden soll. Zu diesem Zweck wird zunächst die mit dem Bildmotiv zu belegende Glasoberfläche mit einer Vielzahl kleiner Vertiefungen versehen, was beispielsweise durch Abdecken der Oberfläche mit einer gitterförmigen Maske und Ätzen mit Fluorwasserstoffsäure erreicht wird. Der mit dem Bildmotiv versehene Gelatinefilm wird in einen geheizten flüssigen Harzkleber getaucht und danach auf die zuvor bearbeitete Glasoberfläche gelegt und gegen diese gepresst. Schliesslich wird das Ganze beheizt, um dadurch den Harzkleber auszuhärten. Um ein gefälliges Ergebnis zu erzielen, werden die Abmessungen der in die Glasoberfläche gebildeten Vertiefungen so gewählt, dass bei Betrachtung des Bildmotivs durch das Glas hindurch keine erhebliche Bildverzerrung ersichtlich ist. Nichtsdestotrotz kann die Glasoberfläche nicht so glatt sein, wie dies aus ästhetischen Gründen wünschbar wäre.

Ein wesentlicher Nachteil des bekannten Verfahrens besteht darin, dass die erforderliche Bearbeitung der Glasoberfläche aufwendig und damit auch teuer ist. Die Verwendung von Fluorwasserstoffsäure erfordert besondere Vorsichtsmassnahmen, eine entsprechende Sicherheitsausrüstung und speziell ausgebildetes Personal. Ein weiterer Nachteil ergibt sich daraus, dass das Tränken des Gelatinefilms mit Harzkleber nicht immer eine gleichmässige Belegung ergibt. Aus diesem Grund lässt die mechanische Widerstandsfähigkeit des Verfahrenserzeugnisses zu wünschen, wobei insbesondere die Gefahr besteht, dass es im ausgehärteten Harzkleber zu Rissen kommt oder dass ungenügend mit Harz belegte Teile des Gelatinefilms durch mechanische Ausseneinwirkungen beschädigt werden. Schliesslich kann aber auch die beim bekannten Herstellungsverfahren erforderliche Wärmebehandlung nachteilig sein, da nicht alle als Träger eines Bildmotivs geeigneten Materialien hitzebeständig sind.

Die GB-A-2 153 744 beschreibt ein dekoratives Element mit einem durchscheinenden Substrat sowie einem daran angebrachten Bildmotiv, wobei das Substrat eine mit einer durchscheinenden Klebeschicht belegte Auflagefläche aufweist, die Klebeschicht aus einer beidseitig klebenden Transparent-Folie gebildet ist und auf der substratabgewandten Seite der Klebeschicht eine das Bildmotiv enthaltende Bildschicht angeordnet ist. Insbesondere handelt es sich bei der Bildschicht um eine Melaminschicht; das Bildmotiv wird dabei durch die dem Substrat zugewandte, mit einem holzartigen Muster versehene Seite der Melaminschicht gebildet.

Die US-A-5 082 703 beschreibt ein weiteres dekoratives Element. Dieses umfasst ein durchscheinendes Substrat und - in Form einer direkt darauf angebrachten Tintenschicht - ein Bildmotiv. Weiterhin umfasst das dekorative Element eine Deckschicht, welche die Tintenschicht einschliesslich deren Umrandung überdeckt. Diese Deckschicht kann aus einem geeigneten Material wie Papier, Plastik oder Metallfolie gebildet sein; alternativ kann die Deckschicht aus einer aufgebrachten Lage gebildet sein, wobei die Schicht aus jedwelcher geeigneter reflektierenden Lösung, beispielsweise eine silber- oder goldbasierte Lösung gebildet sein, und wobei die besagte Lage mit einer schützenden Farbschicht und gegebenenfalls mit einem schützenden Substrat wie einer Kupferfolie oder -lage versehen sein kann.

### Darstellung der Erfindung

Aufgabe der Erfindung ist es, ein dekoratives Element sowie ein Verfahren zu dessen Herstellung anzugeben, mit welchen die oben genannten Nachteile vermieden werden.

Gelöst werden diese Aufgaben durch das im Anspruch 1 definierte dekorative Element sowie durch das im Anspruch 8 definierte Herstellungsverfahren.

Das erfindungsgemässe dekorative Element umfasst ein durchscheinendes Substrat sowie ein daran angebrachtes Bildmotiv. Das Substrat weist mindestens eine mit einer Klebeschicht belegte Auflagefläche auf, wobei die Klebeschicht aus einer beidseitig Klebenden Transparentfolie gebildet ist, wobei auf der substratabgewandten Seite der Klebeschicht eine das Bildmotiv enthaltende Bildschicht angeordnet ist und wobei die gesamte Bildschicht einschliesslich deren Umrandung mit einer durchscheinenden Deckschicht belegt ist.

Beim erfindungsgemässen Verfahren belegt man zunächst die Auflagefläche des Substrates mit einer durchscheinenden Klebeschicht, deren Abmessungen dem anzubringenden Bildmotiv angepasst sind. Danach bringt man die das Bildmotiv enthaltende Bildschicht auf die substratabgewandte Seite der Klebeschicht an, und schliesslich trägt man eine durchscheinende Deckschicht auf die Bildschicht auf derart, dass die gesamte Bildschicht einschliesslich deren Umrandung abgedeckt wird.

Somit ist es nicht erforderlich, die mit dem Bildmotiv zu versehende Auflagefläche mit Vertiefungen auszustatten. Dementsprechend lässt sich die Auflagefläche sehr glatt gestalten und es kann ein ästhetisch gefälliges Ergebnis erzielt werden. Des weiteren ergibt sich durch das vergleichsweise einfache Herstellungsverfahren, das insbesondere weder eine besondere mechanische Bearbeitung der Auflagefläche noch die Verwendung von Flusssäure und die zugehörigen Sicherheitsmassnahmen erfordert, eine deutliche Reduktion der Herstellungskosten und eine geringere Umweltbelastung. Dadurch, dass die gesamte Bildschicht einschliesslich deren Umrandung durch die Deckschicht überlagert ist, ergibt sich ein luft- und wasserdichter Abschluss, welcher die Bildschicht vor äusseren Einwirkungen weitestgehend schützt und damit ein dauerhaftes Erscheinungsbild des dekorativen Elementes gewährleistet. Dadurch dass die Klebeschicht aus einer beidseitig klebenden Transparent-Folie gebildet ist, wird eine gute Fixierung der Bildschicht an das Substrat und dennoch eine gute Lichtdurchlässigkeit gewährleistet.

Vorteilhafte Ausgestaltungen der Erfindung sind in den abhängigen Ansprüchen definiert.

Grundsätzlich eignen sich für das Substrat verschiedene durchscheinende Materialien, zu denen namentlich Polymethacrylate (Plexiglas®) gehören. Vorzugsweise ist das durchscheinende Substrat aus Glas gebildet, welches sich durch hohe Temperaturbeständigkeit, gute Formbeständigkeit und hohe Transparenz auszeichnet. Ausserdem lässt sich ein Glassubstrat mit einer Auflagefläche hervorragender Ebenheit ausstatten. Ein weiterer Vorteil eines Substrates aus Glas liegt darin, dass sämtliche Aussenflächen, also nicht nur die eigentliche Auflagefläche, sehr glatt sein können, was ein visuell ansprechendes Ergebnis liefert.

Die das Bildmotiv enthaltende Bildschicht kann beispielsweise durch ein Tintenstrahlverfahren auf die Klebeschicht aufgetragen sein. Vorzugsweise ist jedoch die Bildschicht aus einer das Bildmotiv enthaltenden Folie, insbesondere eine Klarfilm-Folie gebildet. Dadurch ergibt sich eine gute optische Detailtreue und eine hervorragende Farbechtheit.

In einer besonders bevorzugten Ausgestaltung ist die durchscheinende Deckschicht aus einem Klarlack gebildet. Vorzugsweise handelt es sich dabei um einen aufgesprühten Klarlack, der nach dem Aushärten eine hochtransparente, mechanisch widerstandsfähige Deckschicht bildet. Besonders bewährt haben sich Lacke, die zur Herstellung von Deckschichten von Kraftfahrzeugen vorgesehen sind.

Es sind zahlreiche Formen des durchscheinenden Substrates möglich, welches beispielsweise als durchscheinender Vollkörper ausgebildet sein kann. Für manche Anwendungen geeignet sind plattenförmige Substrate, welche insbesondere für Tische und andere Möbelstücke, für Wandbüder aber auch für komplexere, zusammengesetzte Objekte geeignet sind. Als Hohlkörper ausgebildete Substrate eignen sich beispielsweise für Beleuchtungselemente.

Bei einer weiteren Ausgestaltung weist das dekorative Element zusätzlich eine UV-Schutzschicht für das Bildmotiv auf. Damit soll insbesondere ein Ausbleichen des Bildmotivs unter Einwirkung von Sonnenlicht vermieden werden. Gewünschtenfalls kann die UV-Schutzschicht als äusserste Schicht am dekorativen Element angebracht sein, wodurch nebst dem Bildmotiv auch die Deckschicht vor Sonneneinwirkung geschützt wird.

Grundsätzlich kann die transparente Deckschicht aufgepinselt, aufgespachtelt oder in Folienform sonstwie aufgetragen werden. Besonders bevorzugt ist eine Ausführungsform, wonach die transparente Deckschicht aufgesprüht wird.

### Kurze Beschreibung der Zeichnungen

Ausführungsbeispiele der Erfindung werden nachfolgend anhand der Zeichnungen näher beschrieben, dabei zeigen:
- Fig. 1: ein dekoratives Element, in Draufsicht;
- Fig. 2: das dekorative Element der Fig. 1, gemäss dem Schnitt II-II der Fig. 1;
- Fig. 3: ein weiteres dekoratives Element, in einer Querschnittdarstellung.

### Wege zur Ausführung der Erfindung

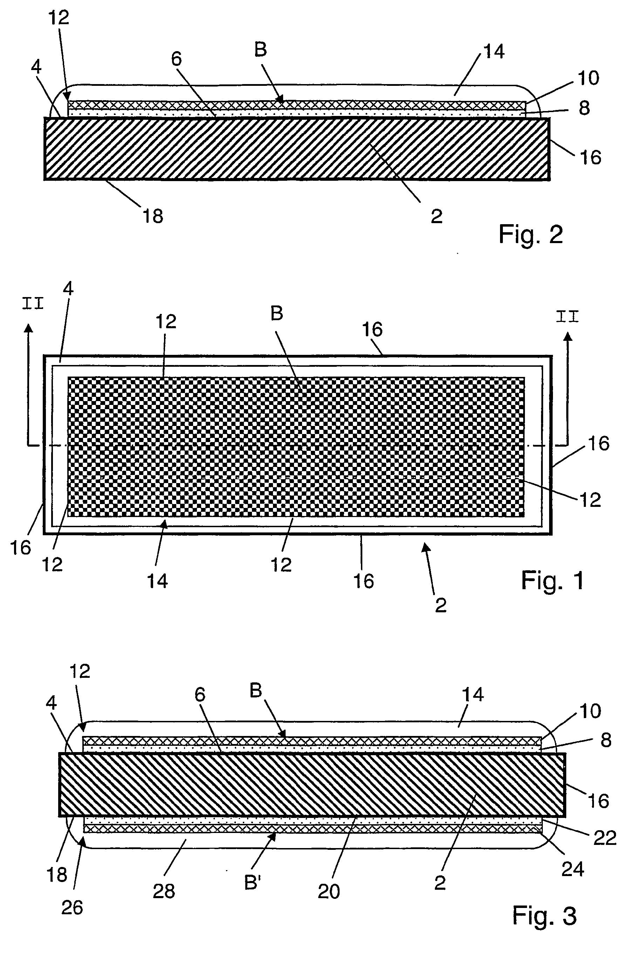

Das in den Fig. 1 und 2 dargestellte dekorative Element weist eine als durchscheinendes Substrat wirkende Glasplatte 2 auf, deren in der Fig. 2 obenliegend dargestellte Frontfläche 4 eine im wesentlichen planare frontseitige Auflagefläche 6 für ein frontseitiges Bildmotiv B bildet. Die Auflagefläche 6 ist mit einer durchscheinenden frontseitigen Klebeschicht 8 belegt, auf deren substratabgewandten Seite eine das Bildmotiv B enthaltende frontseitige Bildschicht 10 angeordnet ist. Die gesamte Bildschicht 10 einschliesslich deren frontseitige Umrandung 12 ist mit einer durchscheinenden frontseitigen Deckschicht 14 belegt. Im gezeigten Beispiel sind die Seitenflächen 16 sowie die der Auflagefläche 6 gegenüberliegende Rückfläche 18 unbeschichtet.

Ein weiteres dekoratives Element ist in der Fig. 3 dargestellt. Dieses weist ebenfalls eine Glasplatte 2 auf, wobei aber im Unterschied zum Element der Fig. 1 und 2 sowohl die Frontfläche 4 als auch die Rückfläche 18 mit einem zugeordneten Bildmotiv B bzw. B' versehen sind. Die Anbringungsart des rückseitigen Bildmotivs B' ist dabei identisch wie beim frontseitigen Bildmotiv B: die Rückfläche 18 bildet eine rückseitige Auflagefläche 20, die mit einer rückseitigen Klebeschicht 22 belegt ist, auf deren substratabgewandten Seite eine das Bildmotiv B' enthaltende rückseitige Bildschicht 24 angeordnet ist. Die gesamte rückseitige Bildschicht 24 einschliesslich deren rückseitige Umrandung 26 ist mit einer durchscheinenden Deckschicht 28 belegt. Bei der hier beschriebenen Ausgestaltung wird die visuelle Erscheinung des dekorativen Elementes durch beide Bildmotive geprägt. Insbesondere ergibt sich aufgrund der Lichtbrechung an den verschiedenen Schichtgrenzen ein scheinbarer seitlicher Versatz zwischen den beiden Bildmotiven. Damit lassen sich je nach Anwendungsbereich des dekorativen Elementes dreidimensional-artige Bildeffekte erzielen.

Die Herstellung eines plattenförmigen dekorativen Elementes ist nachfolgend beschrieben, die Herstellung von nicht-plattenförmigen dekorativen Elementen erfolgt auf analoge Art und Weise. Eine Platte aus Weissglas (sogenanntes "opti-white") mit Abmessungen 140 x 100 x 25 cm wurde frontseitig mit einer beidseitig klebenden Transparent-Folie vom Typ Permatrans 2113, 36 Mikron, Hersteller Mactac, belegt. Die Folie war vorgängig auf ein Flächenmass von 138 x 98 cm zugeschnitten worden und wurde so auf die Glasplatte angebracht, dass rundum ein Rand von ca. 1 cm freiblieb. Anschliessend wurde eine ein Bildmotiv enthaltende Bildfolie in Form eines fotografischen Klarfilms ("Clear film") mit Flächenmass 138 x 98 cm kongruent auf die Klebeschicht aufgebracht. Schliesslich wurde ein als Autolack gebräuchlicher Klarlack vom Typ PPG 2.k. mittels einer Sprühvorrichtung in einer gleichmässig bedeckenden Schichtdicke von 0.5 mm auf die Bildfolie sowie auf eine die Bildfolie bis im Abstand von ungefähr 1 mm umrandende Zone der Glasplatte aufgebracht. Das so hergestellte dekorative Element wurde schliesslich während 3 Tagen bei Raumtemperatur gelagert, um eine vollständige Aushärtung des Klarlackes zu gewährleisten. Gewünschtenfalls kann anschliessend in einem zweiten Arbeitsgang auf dieselbe Weise ein rückseitiges Bildmotiv angebracht werden. Prinzipiell können auch beide Plattenseiten in einem einzigen Arbeitsgang mit Bildmotiven versehen werden, wobei für einen solchen Fall geeignete Halterungs- und Bearbeitungsvorrichtungen erforderlich sind.

Ein plattenförmiges dekoratives Element der obigen Art kann beispielsweise als Tischplatte verwendet werden. Weitere Einsatzmöglichkeiten umfassen beispielsweise bildartige Wanddekorationen, Fussbodenabschnitte und Raum-Aufteilungselemente. Beim Einsatz in Aussenbereichen, beispielsweise an Gebäudefassaden, sind die Elemente zweckmässigerweise mit einer UV-Schutzschicht ausgestattet. Plattenförmige Elemente können aber auch zum Aufbau von Hohlkörpern verwendet werden, die insbesondere für Beleuchtungselemente mit einer im Inneren des Hohlkörpers befindlichen Lichtquelle geeignet sind. Weitere Anwendungen umfassen nicht-plattenförmige dekorative Elemente, beispielsweise in Form massiver Würfel oder Quader, die an einer oder mehreren Flächen mit einem Bildelement versehen sind.

Je nach Anwendungsart, Umgebung und Lichtsituation sind zur Erzielung ansprechender ästhetischer Ergebnisse mehr oder weniger kräftig gefärbte Bildmotive vorteilhaft.

Durch die Verwendung von Original-Bildmotiven im Sinne von Unikaten oder von limitierten Serien kann das dekorative Element mit einem zusätzlichen Mehrwert versehen werden.

### Bezugszeichenliste

- 2: Substrat
- 4: Frontfläche von 2
- 6: frontseitige Auflagefläche
- 8: frontseitige Klebeschicht
- 10: frontseitige Bildschicht
- 12: frontseitige Umrandung von 10
- 14: frontseitige Deckschicht
- 16: Seitenfläche von 2
- 18: Rückfläche von 2
- 20: rückseitige Auflagefläche
- 22: rückseitige Klebeschicht
- 24: rückseitige Bildschicht
- 26: rückseitige Umrandung von 24
- 28: rückseitige Deckschicht
- B, B': Bildmotiv

## Patentansprüche

1. Dekoratives Element, mit einem durchscheinenden Substrat (2) sowie einem daran angebrachten Bildmotiv (B), **dadurch gekennzeichnet, dass** das Substrat mindestens eine mit einer durchscheinenden Klebeschicht (8) belegte Auflagefläche (4) aufweist, wobei die Klebeschicht aus einer beidseitig klebenden Transparent-Folie gebildet ist und auf der substratabgewandten Seite der Klebeschicht (8) eine das Bildmotiv enthaltende Bildschicht (10) angeordnet ist und wobei die gesamte Bildschicht (10) einschliesslich deren Umrandung (12) mit einer durchscheinenden Deckschicht (14) belegt ist.

2. Dekoratives Element nach Anspruch 1, **dadurch gekennzeichnet, dass** das Substrat aus Glas gebildet ist.

3. Dekoratives Element nach einem der Ansprüche 1 bis 2, **dadurch gekennzeichnet, dass** die Bildschicht aus einer das Bildmotiv enthaltenden Bildfolie gebildet ist.

4. Dekoratives Element nach einem der Ansprüche 1 bis 3, **dadurch gekennzeichnet, dass** die durchscheinende Deckschicht aus einem Klarlack gebildet ist.

5. Dekoratives Element nach einem der Ansprüche 1 bis 4, **dadurch gekennzeichnet, dass** das Substrat im wesentlichen plattenförmig ist.

6. Dekoratives Element nach einem der Ansprüche 1 bis 4, **dadurch gekennzeichnet, dass** das Substrat als Hohlkörper ausgebildet ist.

7. Dekoratives Element nach einem der Ansprüche 1 bis 6, **dadurch gekennzeichnet, dass** es mit einer UV-Schutzschicht für das Bildmotiv ausgestattet ist.

8. Verfahren zur Herstellung eines dekorativen Elementes nach einem der Ansprüche 1 bis 7, wobei man die Auflagefläche des Substrates (2) mit einer durchscheinenden Klebeschicht (8) belegt, deren Abmessungen dem anzubringenden Bildmotiv angepasst sind, danach die das Bildmotiv enthaltende Bildschicht auf die substratabgewandte Seite der Klebeschicht anbringt und schliesslich eine durchscheinende Deckschicht (14) auf die Bildschicht aufträgt derart, dass die gesamte Bildschicht einschliesslich deren Umrandung abgedeckt wird.

9. Verfahren nach Anspruch 8, **dadurch gekennzeichnet, dass** man die durchscheinende Deckschicht durch Sprühen aufträgt.

## Claims

1. A decorative element with a translucent substrate (2) as well as an image pattern (B) applied thereto, **characterized in that** the substrate comprises at least one support surface (4) covered by a translucent adhesive layer (8), the adhesive layer being made of a bilaterally adhesive transparent foil and an image layer (10) comprising the image pattern being arranged on the side of the adhesive layer (8) that is facing away from the substrate, and the entire image layer (10) including its border (12) being covered with a translucent covering layer (14).

2. A decorative element according to claim 1, **characterized in that** the substrate is made of glass.

3. A decorative element according to any on of claims 1 to 2, **characterized in that** the image layer is made of an image foil containing the image pattern.

4. A decorative element according to any one of claims 1 to 3, **characterized in that** the translucent covering layer is made of a clear lacquer.

5. A decorative element according to any one of claims 1 to 4, **characterized in that** the substrate is substantially plate-shaped.

6. A decorative element according to any one of claims 1 to 4, **characterized in that** the substrate is shaped as a hollow body.

7. A decorative element according to any one of claims 1 to 6, **characterized in that** it is provided with a UV protection layer for the image pattern.

8. A process for producing a decorative element according to any one of claims 1 to 7, in which the support surface of the substrate (2) is covered with a translucent adhesive layer (8), the dimensions of which are adapted to the image pattern to be applied, then the image layer containing the image pattern is applied on the side of the adhesive layer that is facing away from the substrate, and finally a translucent covering layer (14) is applied on the image layer in such a way that the entire image layer including its border is covered.

9. A process according to claim 8, **characterized in that** the translucent covering layer is applied by spraying.

## Revendications

1. Elément décoratif comportant un substrat translucide (2) ainsi qu'un motif imagé (B) appliqué à celui-ci, **caractérisé en ce que** le substrat comporte au moins une surface de support (4) recouverte d'une couche adhésive translucide (8), la couche adhésive étant formée d'un feuillet transparent adhésif sur ses deux faces et une couche d'image (10) contenant le motif imagé étant disposée sur la face de la couche adhésive (8) détournée du substrat, et la totalité de la couche d'image (10) y compris sa bordure (12) étant recouverte d'une couche de couverture translucide (14).

2. Elément décoratif selon la revendication 1, **caractérisé en ce que** le substrat est fait de verre.

3. Elément décoratif selon l'une des revendications 1 à 2, **caractérisé en ce que** la couche d'image est formée d'un feuillet d'image contenant le motif imagé.

4. Elément décoratif selon l'une des revendications 1 à 3, **caractérisé en ce que** la couche de couverture translucide est faite d'une laque transparente.

5. Elément décoratif selon l'une des revendications 1 à 4, **caractérisé en ce que** le substrat est essentiellement en forme de plaque.

6. Elément décoratif selon l'une des revendications 1 à 4, **caractérisé en ce que** le substrat est formé comme corps creux.

7. Elément décoratif selon l'une des revendications 1 à 6, **caractérisé en ce qu'**il est pourvu d'une couche de protection du motif imagé contre les rayonnements ultraviolets.

8. Procédé de fabrication d'un élément décoratif selon l'une des revendications 1 à 7, dans lequel on recouvre la surface de support du substrat (2) d'une couche adhésive translucide (8) dont les dimensions sont adaptées au motif imagé à appliquer, puis on applique la couche d'image contenant le motif imagé sur la face de la couche adhésive détournée du substrat, et enfin on applique sur la couche d'image une couche de couverture translucide (14) de telle manière que la totalité de la couche d'image y compris sa bordure soient recouvertes.

9. Procédé selon la revendication 8, **caractérisé en ce que** l'on applique la couche de couverture translucide par pulvérisation.
